# EUROPEAN PATENT SPECIFICATION

(11) **EP 1 241 079 B1**
(45) Date of publication and mention of the grant of the patent: **29.08.2007**
(21) Application number: 02003472.4
(22) Date of filing: 14.02.2002
(51) Int. Cl.: B62D 25/04, B62D 27/02

(54) **Method of manufacturing side panel in vehicle body**
Herstellungsverfahren von Fahrzeugkarosserie-Seitenwänden
Méthode de construction de panneaux latéreaux de carrosserie de véhicule automobile

(30) Priority: 14.03.2001 JP 2001072180
(43) Date of publication of application: 18.09.2002
(73) Proprietor: HONDA GIKEN KOGYO KABUSHIKI KAISHA, Tokyo (JP)
(72) Inventor: Hirano, Katsumi, Wako-shi, Saitama (JP); Suzuki, Masayuki, Wako-shi, Saitama (JP)
(74) Representative: Prechtel, Jörg

(56) References cited:
- US-A- 5 938 275
- PATENT ABSTRACTS OF JAPAN vol. 1995, no. 01, 28 February 1995 (1995-02-28) & JP 06 286651 A (MAZDA MOTOR CORP), 11 October 1994 (1994-10-11)
- PATENT ABSTRACTS OF JAPAN vol. 2000, no. 14, 5 March 2001 (2001-03-05) & JP 2000 313353 A (NISSAN MOTOR CO LTD), 14 November 2000 (2000-11-14)
- PATENT ABSTRACTS OF JAPAN vol. 1997, no. 11, 28 November 1997 (1997-11-28) & JP 09 193830 A (NISSAN SHATAI CO LTD), 29 July 1997 (1997-07-29)

## Description

### BACKGROUND OF THE INVENTION

This invention relates to a method of manufacturing a side panel in a vehicle body.

A side panel in a vehicle body of an automobile or the like accepts a door, and thus includes an outside panel in which an opening for a door is formed. In case the vehicle body has doors provided in front and in rear at each side panel as in a so-called four-door sedan, a front opening and a rear opening are formed in an outside panel thereof. In such an outside panel is commonly fitted an inner frame for providing a vehicle body with stiffness. The inner frame is comprised of a plurality of inner members.

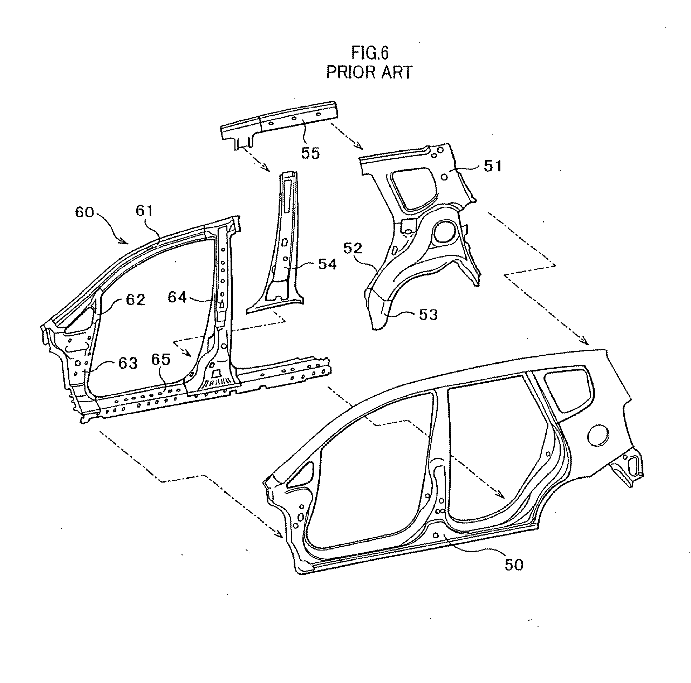

A description will be given of a conventional method of manufacturing a side panel in a vehicle body of the above type with reference to FIG. 6. When inner members are attached to a side panel 50, a framework 60 covering a front opening is formed first. The process steps for forming the framework 60 are as follows. A front pillar stiffener upper 61, a front pillar inner middle 62, and a front pillar stiffener lower 63 are assembled in advance, and an upper end of a center pillar stiffener 64 is first joined to a rear end of the front pillar stiffener upper 61 by welding. Then, a front end of a side sill stiffener 65 is joined to a lower end of the front pillar stiffener lower 63 by welding. Further, a midpoint of the length of the side sill stiffener 65 and a lower end of the center pillar stiffener 64 are joined to each other by welding. Accordingly, the above members are formed into the framework.

After the framework 60 is formed, the framework 60 is joined to the outside panel 50 by welding. Subsequently, the inner members in the rear are mounted in sequence. Among the inner members to be mounted in the rear. a rear inner upper 51. a rear wheel arch 52, and a wheel arch extension 53 are assembled in advance. The process steps for mounting the inner members in the rear are as follows. First, a center pillar inner 54 is mounted on an inner side of the center pillar stiffener 54 of the framework 60 by welding. Next, a front end of a roof side rail 55 is fitted to an upper end of the center pillar inner 54, and the roof side rail 55 is joined to the outside panel 50 by welding. Subsequently, the rear inner upper 51 is fitted to a rear end of the roof side rail 55, and the assembly of the rear inner upper 51, rear wheel arch 52, and wheel arch extension 53 are joined to the outside panel 50 by welding. Hereupon, a lower end of the arch extension 53 comes in contact with a rear end of the side sill stiffener 65.

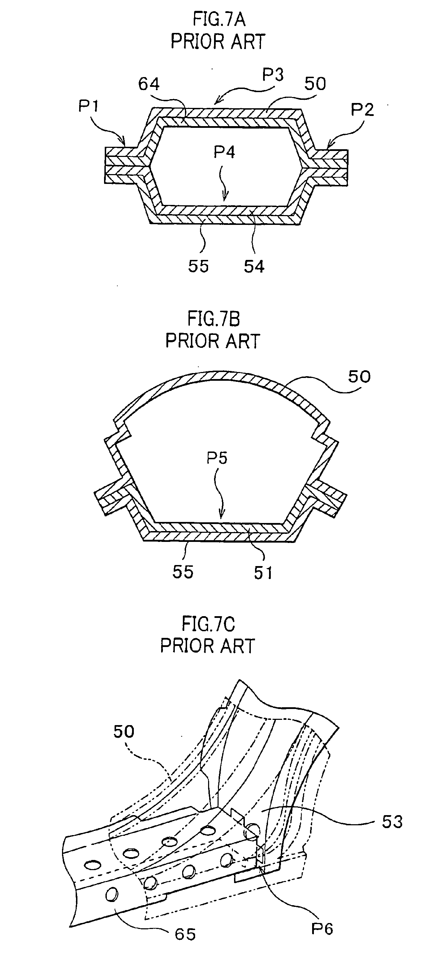

In the conventional method as described above of manufacturing a side panel in a vehicle body, when the rear inner members are joined by welding, the welding may be done with ease between the rear inner members and the outside panel 50, but the welding among the inner members is very difficult as some welding spots are hidden by the outside panel 50. To be more specific, the center pillar stiffener 64, the center pillar inner 54, and the roof side rail 55 overlap one another at a portion as shown in FIG. 7A. In addition, the rear inner upper 51 and the roof side rail 55 overlap each other at a portion as shown in FIG. 7B. Further, the wheel arch extension 53 and the side sill stiffener 65 overlap each other at a portion as shown in FIG. 7C. If these portions are overlapped by the outside panel 50, spots P1 and P2 shown in FIG. 7A may be welded easily, but a spot P3 at which the outside panel 50 and the center pillar stiffener 64 overlap each other, and a spot P4 at which the center pillar inner 54 and the roof side rail 55 overlap each other are very difficult to weld. Likewise, a spot P5 at which the rear inner upper 51 and the roof side rail 55 overlap each other as shown in FIG. 7B, and a spot P6 at which the wheel arch extension 53 and the side sill stiffener 65 overlap each other as shown in FIG. 7C are spaced from the outside panel 50. Therefore, the welding at the spots P5 and P6 is very difficult, or, considering the working efficiency or the like, impossible in fact.

The portions that are not welded for the above reason have lower stiffness as a matter of course. In particular, since the side sill stiffener 65 and the wheel arch extension 53 as shown in FIG. 7C are not welded, stiffness against an offset collision is disadvantageously reduced.

### SUMMARY OF THE INVENTION

Therefore, it is an exemplified object of the present invention to increase stiffness against an offset collision by making it possible to weld a portion corresponding to a side sill stiffener and a wheel arch extension.

In order to achieve the above object, there is provided a method of manufacturing a side panel in a vehicle body according to the present invention. as defined in claim 1. Further improvements of the invention according claim 1 are laid down in dependent claims 2-5.

According to the present invention, the inner members provided at a rear portion of the side panel are also formed into a framework, which is the rear framework formed separately from the front framework. Accordingly, a rear end of the rear side sill stiffener corresponding to a rear end of the conventional side sill stiffener may be welded to the wheel arch extension before each member is joined to the outside panel, so that the rear side sill stiffener and the wheel arch extension may be welded with ease. Consequently, stiffness between the rear side sill stiffener and the wheel arch extension may be enhanced, and thus stiffness against an offset collision may be increased.

An embodiment of the present invention will become readily apparent from the following description of preferred embodiments with reference to accompanying drawings.

### BRIEF DESCRIPTION OF THE DRAWINGS

FIG. 1 is an exploded perspective view of a side panel according to the present invention.
FIG. 2A is an exploded perspective view of a front framework.
FIG. 2B is an exploded perspective view of a rear framework.
FIG. 3 is a perspective view of a junction between a rear side stiffener and a wheel arch extension.
FIG. 4A is a cross-sectional view of a portion at which a center pillar stiffener, a center pillar inner, and a side sill stiffener overlap.
FIG. 4B is a cross-sectional view of a portion at which a rear inner upper and a roof side rail overlap.
FIG. 5 is an illustration for explaining stiffness against an offset collision.
FIG. 6 is an exploded perspective view of a conventional side panel of a vehicle body.
FIG. 7A is a cross-sectional view of a portion at which a center pillar stiffener, a center pillar inner, and a side sill stiffener overlap in the conventional side panel as shown in FIG. 6.
FIG. 7B is a cross-sectional view of a portion at which a rear inner upper and a roof side rail overlap in the conventional side panel as shown in FIG. 6.
FIG. 7C is a cross-sectional view of a portion at which a wheel arch extension and a side sill stiffener overlap in the conventional side panel as shown in FIG. 6.
**DETAILED DESCRIPTION OF THE PREFERRED EMBODIMENTS**

### A description will be given in detail of embodiments of the present invention with reference to the drawings.

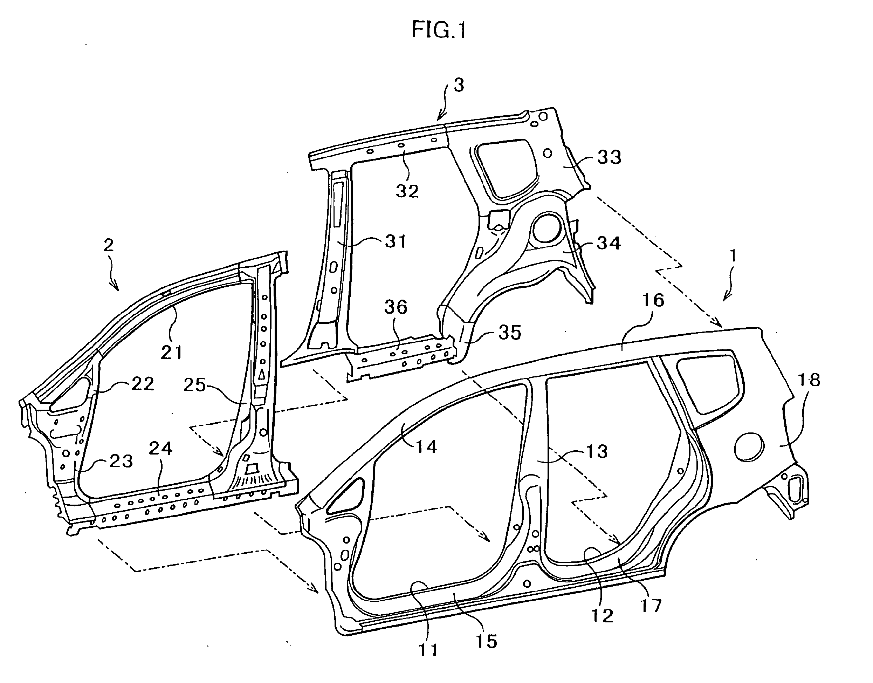

FIG. 1 is an exploded perspective view of a side panel in a vehicle body according to the present invention.

As shown in FIG. 1, the side panel in a vehicle body manufactured by the manufacturing method according to the present invention includes an outside panel 1, a front framework 2, and a rear framework 3.

The outside panel 1 includes a front opening 11 and a rear opening 12 to which front and rear doors (not shown) are respectively attached. The front opening 11 and the rear opening 12 are partitioned with a center pillar 13. A front pillar 14 is provided frontward of an upper portion of the center pillar 13, while a front side sill 15 is provided rearward of the lower portion of the enter pillar 13. In addition, an upper roof 16 is provided rearward of an upper portion of the center pillar 13, while a rear side sill 17 is provided rearward of a lower portion of the center pillar 13. Further, a rear fender 18 is provided rearward of the upper roof 16 and rear side sill 17. Inside each component of the outside panel 1 are formed gaps (not shown) for accommodating inner members.

The front framework 2 includes a front pillar inner upper 21, a front pillar inner middle 22, a front pillar stiffener lower 23, a front side sill stiffener 24, and a center pillar stiffener 25, which are assembled into one piece. All of these components correspond to the inner members of the present invention.

Among the above inner members, the front pillar inner upper 21, front pillar inner middle 22, and front pillar stiffener lower 23 have been assembled in advance. However, these components do not necessarily have to be assembled in advance. An upper end of the center pillar stiffener 25 is joined to a rear end of the front pillar inner upper 21, while a front end of the front side sill stiffener 24 is joined to a lower end of the front pillar stiffener lower 23. Further, a rear end of the front side sill stiffener 24 is joined to a lower end of the center pillar stiffener 25.

Among the above components, the center pillar stiffener 25 is stored in a gap formed in the center pillar 13 of the outside panel 1. Similarly, the front pillar inner upper 21 is stored in a gap formed in the front pillar 14, and the front side sill stiffener 24 is stored in a gap formed in the front side sill 15.

The framework 3 includes a center pillar inner 31, a roof side rail 32, a rear inner upper 33, a rear wheel arch 34, a wheel arch extension 35, and a rear side sill stiffener 36. All of these components correspond to the inner members of the present invention.

Among the above inner members, the rear inner upper 33, rear wheel arch 34, and wheel arch extension 35 have been assembled in advance. However, these components do not necessarily have to be assembled in advance. A front end of the roof side rail 32 is joined to an upper end of the center pillar inner 31, while an upper end of the rear inner upper 33 is joined to a rear end of the roof side rail 32. Further, a rear end of the rear side sill stiffener 36 is joined to a lower end of the wheel arch extension 35, while a front end of the rear side sill stiffener 36 is joined to a lower end of the center pillar inner 31.

Among the above components, the center pillar inner 31 is stored in a gap formed in the center pillar 13 of the outside panel 1 through the center pillar stiffener 25 of the front framework 2. In addition, the roof side rail 32 is stored in a gap formed in the upper roof 16; the rear inner upper 33, rear wheel arch 34, and wheel arch extension 35 are stored in a gap formed in the rear fender 18. Further, the rear side sill stiffener 36 is stored in a gap formed in the rear side sill 17.

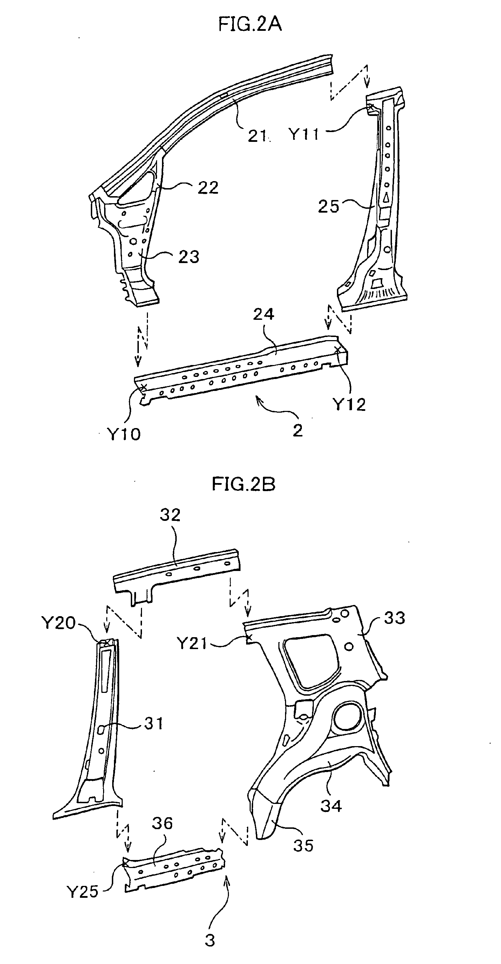

A description will be given of a manufacturing process of a thus-structured side panel in a vehicle body with reference made principally to FIG. 2.

In the manufacturing process according to the present embodiment, the front framework 2 and rear framework 3 are manufactured first. The front framework 2 and rear framework 3 each are manufactured in a separate process.

As shown in FIG. 2A, at the outset of the manufacturing process of the front framework 2, the front pillar inner upper 21, front pillar inner middle 22, and front pillar stiffener lower 23 are assembled in advance. Next, a front end of the front side sill stiffener 24 is joined to a lower end of the front pillar stiffener lower 23 by spot welding at a welding spot Y10. It is to be understood that each welding process in the present embodiment as will be described below is done by spot welding. Subsequently, an upper end of the center pillar stiffener 25 is joined to a rear end of the front pillar inner upper 21 at a welding spot Y11, while a lower end of the center pillar stiffener 25 is joined to a rear end of the front side sill stiffener 24 at a welding spot Y12. It is to be understood that the above process steps of joining by welding may be changed into any other sequence as appropriate. The front framework 2 is manufactured in accordance with the above process steps.

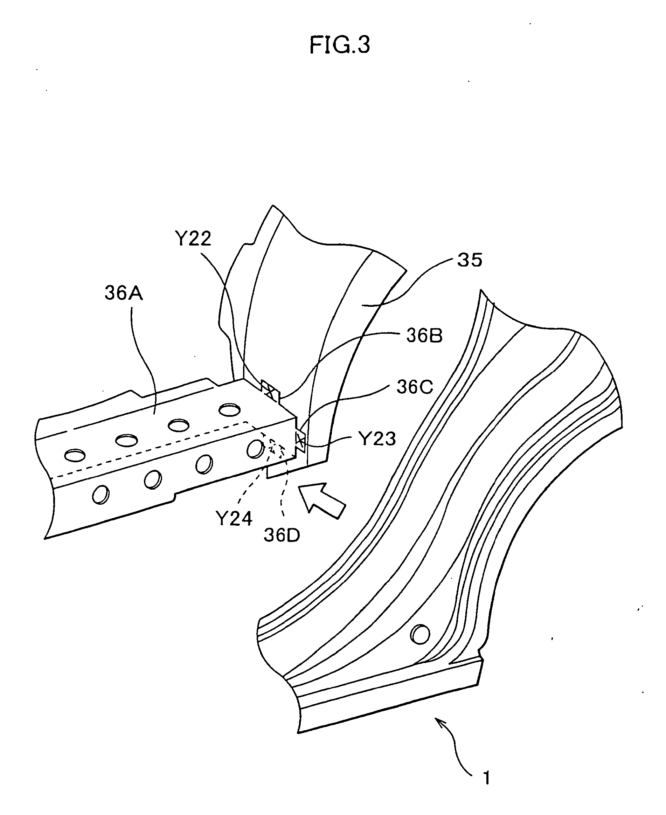

On the other hand, at the outset of the manufacturing process of the front framework 3, the rear inner upper 33, rear wheel arch 34, and wheel arch extension 35 have been assembled in advance. Next, a front end of the roof side rail 32 is welded to an upper end of the center pillar inner 31 at a welding spot Y20. Subsequently, an upper end of the rear inner upper 33 is welded to a rear end of the roof side rail 32 at a welding spot Y21. Further, a rear end of the rear side sill stiffener 36 is joined to a lower end of the wheel arch extension 35 by welding. As shown in FIG. 3, the rear side sill stiffener 36 includes a body portion 36A shaped approximately like a letter U in cross section, and at a rear end of each planer portion thereof are provided flanges 36B, 36C, 36D respectively. The flanges 36B, 36C, 36D are used for welding spots Y22 through Y24 to join the rear side sill stiffener 36 and the wheel arch extension 35. Then, as shown in FIG. 2, a front end of the rear side sill stiffener 36 is welded to a lower end of the center pillar inner 31 at a welding spot Y25.

The thus-formed rear framework 3 serves to facilitate welding operation as the rear side sill stiffener 36 and wheel arch extension 35 are joined at welding spots Y22 through 24 before these components are fitted in the outside panel 1. Consequently, the rear side sill stiffener 36 and wheel arch extension 35 may be welded without impairing the working efficiency.

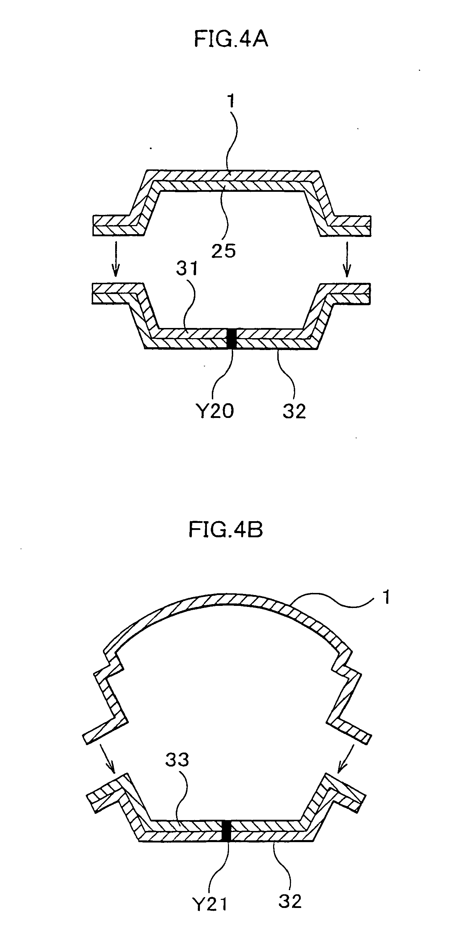

As shown in FIG. 4A, joining between the center pillar inner 31 and the roof side rail 32 at the welding spot Y20 is performed before fitting these components in the outside panel 1. Accordingly, the center pillar inner 31 and the roof side rail 32 may be welded easily at the welding spot Y20.

Similarly, as shown in FIG. 4B, joining between the roof side rail 32 and the rear inner upper 33 at the welding spot Y21 is also performed before fitting these components in the outside panel 1. Accordingly, the roof side rail 32 and the rear inner upper 33 may be welded easily at the welding spot Y21.

After the front framework 2 and the rear framework 3 are manufactured in such a manner as described above, the front framework 2 and the rear framework 3 are joined to the outside panel 1. In this operation, the front framework 2 and the rear framework 3 are formed separately so as not to make a framework size too large to facilitate handling, in comparison with a single framework that is formed from all the inner members and then fitted in the outside panel 1. Therefore, the easy handling thereof may provide improved workability, for example, in the process of manufacturing in an assembly line in a factory.

In addition, with regard to the number of components to be fitted in the outside panel 1, the members to be handled is restricted to only two components, *i.e.,* the front framework and the rear framework. Accordingly, the process steps of fitting the inner members in the outside panel 1 may be reduced, in comparison with conventional steps of joining each inner member corresponding to the rear framework 3 in the present invention to the outside panel 1. Consequently, the workability may be improved.

As described above, the front framework 2 and the rear framework 3 are joined to the outside panel 1, and thereby the side panel S in a vehicle body is manufactured.

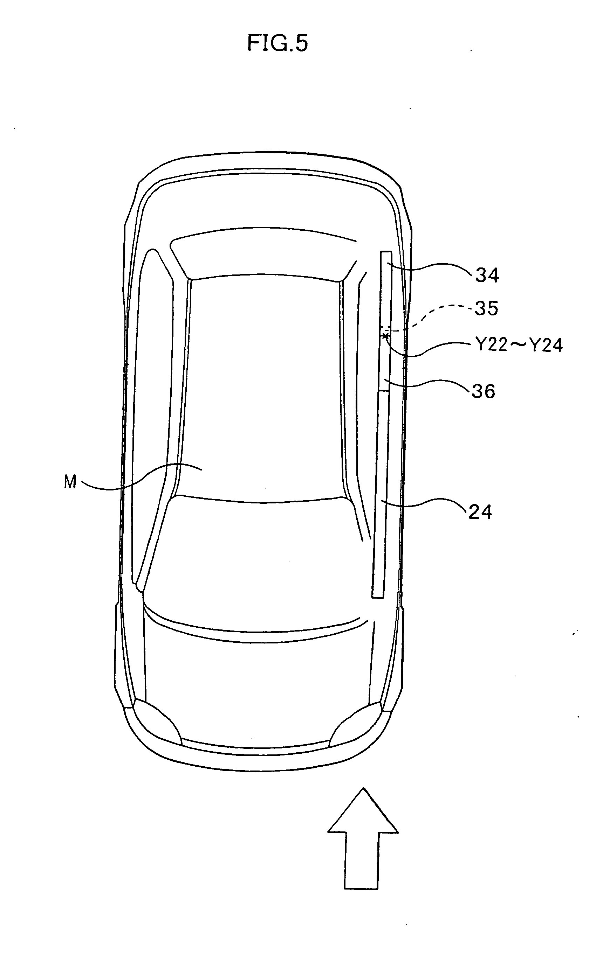

In the vehicle body including a side panel S manufactured as above, the rear side sill stiffener 36 and the wheel extension 35 are joined at welding spots Y22 through Y24. Thus, in case of an offset collision of a vehicle M, for example, as shown in FIG. 5, stiffness between the rear side sill stiffener 36 and the wheel extension 35 is improved. As a result, stiffness against such an offset collision in the vehicle M is increased.

Moreover, the center pillar inner 31 and roof side rail 32 that has not conventionally been welded to each other are joined at the welding spot Y20. Further the roof side rail 32 and rear inner upper 33 are joined at the welding spot Y21. In this respect, as well, the present invention may contribute to improved stiffness in an entire vehicle body. In addition, the welding spots Y20 through Y24 are welded before attachment of the outside panel 1, and therefore the welding operations may be done with ease. Accordingly, the present invention serves to prevent working efficiency from lowering even if the above spots are welded in an assembly line in a factory.

As described above, the present invention may serve to facilitate welding between the rear side sill stiffener and the wheel arch extension. Consequently, stiffness between the rear side stiffener and the wheel arch extension may be enhanced, and thus stiffness against an offset collision may be increased.

A framework structure comprised of the rear framework is provided at a rear portion, too, and thus the process step of setting the inner members in the outside panel may be made easier. Further, the front framework and the rear framework are disposed to overlap on the center pillar, and are welded at the overlapping spot; therefore, stiffness against an offset collision is improved, and in particular, a load in both of the front and rear frameworks to respective upper and lower frames may be more advantageously distributed.

Members corresponding to a side sill stiffener and a wheel arch extension are welded to enhance stiffness against an offset collision. Inner members are formed into a front framework 2 and a rear framework 3 before the inner members are joined to an outside panel 3. At that time, the wheel arch extension 35 and rear side sill stiffener 36 of the rear framework 3 are joined by welding. Thereafter, the front framework 2 and the rear framework 3 are joined to the outside panel 1 by welding.

## Claims

1. A method of manufacturing a side panel (S) in a vehicle body , which side panel (S) is made by fitting a plurality of sheet-like inner members (21-25, 31-36) to an outside panel (1), said outside panel (1) including a front opening to which a front door is to be attached and a rear opening to which a rear door is to be attached, said front opening and said rear opening being separated by a center pillar, the method comprising the steps of:
- joining a number of first sheet-like inner members (21-25) together into a frame-like shape to form a front framework (2) which is to be disposed so as to surround said first front opening of said outside panel (1),
- joining a number of second sheet-like inner members (31-36) together into a frame-like shape to form a rear framework (3) which is to be disposed so as to surround said rear opening of said outside panel (1), said rear framework (3) being formed separately from said front framework (2);
- joining said front framework (2) to said outside panel (1) such that said front framework (2) is disposed around said front opening of said vehicle body, and
- joining said rear framework (3) to said outside panel (1) such that said rear framework (3) is disposed around said rear opening of said vehicle body and joined to said front framework (2) at an overlapping portion formed on said center pillar.

2. Method according to claim 1, wherein said front framework (2) includes a center pillar stiffener (25) and said rear framework (3) includes a center pillar inner (31), and wherein said rear frame work (3) is joined to said outside panel (1) in such a manner that said center pillar stiffener (25) and said center pillar inner (31) are superposed.

3. The method according to claim 1 or 2, wherein said sheet-like inner members (21-25, 31-36) are joined by welding.

4. The method according to any of claims 1 to 3, wherein said front framework is formed from a front pillar inner upper (21), a front pillar inner middle (22), a front pillar stiffener lower (23), a front side sill stiffener (24) and a center pillar stiffener (25).

5. The method according to any of claims 1 to 4, wherein said rear framework is formed from a center pillar inner (31), a roof side rail (32), a rear inner upper (33), rear wheel arch (34), a wheel arch extension (35) and a rear side sill stiffener (36).

## Patentansprüche

1. Verfahren zum Herstellen einer Seitentafel (S) in einer Fahrzeugkarosserie, welche Seitentafel (S) hergestellt wird, indem eine Mehrzahl von blechartigen Innenelementen (21-25, 31-36) an einer Außentafel (1) befestigt werden, wobei die Außentafel (1) eine vordere Öffnung umfasst, an der eine Vordertür anzubringen ist, und eine hintere Öffnung umfasst, an der eine Hintertür anzubringen ist, wobei die vordere Öffnung und die hintere Öffnung durch eine Mittlelsäule getrennt sind, wobei das Verfahren die Schritte umfasst:
Verbinden einer Anzahl von ersten blechartigen Innenelementen (21-25) miteinander zu einer rahmenartigen Form, um ein vorderes Rahmenwerk (2) zu bilden, welches derart anzuordnen ist, dass es die erste vordere Öffnung der Außentafel (1) umgibt;
Verbinden einer Anzahl von zweiten blechartigen Innenelementen (31-36) miteinander zu einer rahmenartigen Form, um ein hinteres Rahmenwerk (3) zu bilden, welches derart anzuordnen ist, dass es die hintere Öffnung der Außentafel (1) umgibt, wobei das hintere Rahmenwerk (3) getrennt von dem vorderen Rahmenwerk (2) ausgebildet ist; Verbinden des vorderen Rahmenwerks (2) mit der Außentafel (1) derart, dass das vordere Rahmenwerk (2) um die vordere Öffnung der Fahrzeugkarosserie herum angeordnet ist, und
Verbinden des hinteren Rahmenwerks (3) mit der Außentafel (1) derart, dass das hintere Rahmenwerk (3) um die hintere Öffnung der Fahrzeugkarosserie angeordnet ist und in einem an der Mittelsäule ausgebildeten Überlappabschnitt mit dem vorderen Rahmenwerk (2) verbunden ist.

2. Verfahren nach Anspruch 1, wobei das vordere Rahmenwerk (2) eine Mittelsäulenversteifung (25) umfasst und das hintere Rahmenwerk (3) ein Mittelsäuleninnenteil (31) umfasst, und wobei das hintere Rahmenwerk (3) mit der Außentafel (1) in einer solchen Weise verbunden wird, dass die Mittelsäulenversteifung (25) und das Mittelsäuleninnenteil (31) übereinander liegen.

3. Verfahren nach Anspruch 1 oder 2, wobei die blechartigen Innenelemente (21-25, 31-36) durch Schweißen verbunden sind.

4. Verfahren nach einem der Ansprüche 1 bis 3, wobei das vordere Rahmenwerk gebildet ist aus einem inneren Frontsäulenoberteil (21), einem inneren Frontsäulenmittelteil (22), einem Frontsäulenversteifungsunterteil (23), einer vorderen Seitenschwellerversteifung (24) und einer Mittelsäulenversteifung (25).

5. Verfahren nach einem der Ansprüche 1 bis 4, wobei das hintere Rahmenwerk gebildet ist aus einem Mittelsäuleninnenteil (31), einer Dachseitenschiene (32), einem hinteren inneren Oberteil (33), einem hinteren Radkasten (34), einer Radkastenverlängerung (35) und einer hinteren Seitenschwellerversteifung (36).

## Revendications

1. Procédé de fabrication d'un panneau latéral (S) d'une carrosserie de véhicule, lequel panneau latéral (S) est fabriqué en fixant une pluralité d'éléments intérieurs de type feuille (21-25, 31-36) à un panneau externe (1), ledit panneau externe (1) comprenant une ouverture avant sur laquelle une portière avant doit être fixée et une ouverture arrière sur laquelle une portière arrière doit être fixée, ladite ouverture avant et ladite ouverture arrière étant séparées par un pied central, le procédé comprenant les étapes consistant à :
- assembler un certain nombre de premiers éléments internes de type feuille (21-25) ensemble en une forme de type cadre afin de former une structure avant (2) qui est prévue pour être disposée de façon à entourer ladite première ouverture avant dudit panneau externe (1),
- assembler un certain nombre de seconds éléments internes de type feuille (31-36) ensemble en une forme de type cadre afin de former une structure arrière (3) qui est prévue pour être disposée de façon à entourer ladite ouverture arrière dudit panneau externe (1), ladite structure arrière (3) étant formée séparément de ladite structure avant (2) ;
- assembler ladite structure avant (2) audit panneau externe (1) de sorte que ladite structure avant (2) est disposée autour de ladite ouverture avant de ladite carrosserie de véhicule, et
- assembler ladite structure arrière (3) audit panneau externe (1) de sorte que ladite structure externe (3) est disposée autour de ladite ouverture arrière de ladite carrosserie de véhicule et assemblée à ladite structure avant (2) au niveau d'une partie de chevauchement formée sur ledit pied central.

2. Procédé selon la revendication 1, dans lequel ladite structure avant (2) comprend un renfort de pied central (25) et ladite structure arrière (3) comprend une partie intérieure du pied central (31), et dans lequel ladite structure arrière (3) est assemblée audit panneau extérieur (1) de telle manière que ledit renfort de pied central (25) et ladite partie intérieure du pied central (31) sont superposés.

3. Procédé selon la revendication 1 ou 2, dans lequel lesdits éléments internes de type feuille (21-25, 31-36) sont assemblés par soudure.

4. Procédé selon l'une quelconque des revendications 1 à 3, dans lequel ladite structure avant est formée depuis une partie supérieure intérieure du pied avant (21), une partie intermédiaire intérieure du pied avant (22), une partie inférieure du renfort du pied avant (23), un renfort de traverse latéral avant (24) et un renfort de pied central (25).

5. Procédé selon l'une quelconque des revendications 1 à 4, dans lequel ladite structure arrière est formée depuis une partie intérieure du pied central (31), un brancard de toit (32), une partie supérieure intérieure arrière (33), un passage de roue arrière (34), une extension de passage de roue (35) et un renfort de traverse latéral arrière (36).
